# EUROPÄISCHE PATENTSCHRIFT

(11) **EP 4 082 715 B1**
(45) Veröffentlichungstag und Bekanntmachung des Hinweises auf die Patenterteilung: **03.09.2025**
(21) Anmeldenummer: 22166666.2
(22) Anmeldetag: 05.04.2022
(51) Int. Cl.: B23Q 1/70, B23Q 17/00

(54) **ARBEITSSPINDEL MIT EINER ÜBERWACHUNGSVORRICHTUNG UND VERFAHREN ZUR ÜBERWACHUNG EINER ARBEITSSPINDEL**
SPINDLE WITH A MONITTORING DEVICE AND METHOD FOR MONITORING A SPINDLE
BROCHE EN TRAVAIL COMPRENANT UN DISPOSITIF DE SURVEILLANCE ET PROCÉDÉ DE SURVEILLANCE D'UNE BROCHE EN TRAVAIL

(30) Priorität: 30.04.2021 DE 102021111159
(43) Veröffentlichungstag der Anmeldung: 02.11.2022
(73) Patentinhaber: Ott-Jakob Spanntechnik GmbH, 87663 Lengenwang (DE)
(72) Erfinder: Greif, Josef, 87496 Friesenried (DE); Bechteler, Wolfgang, 87640 Ebenhofen (DE); Reisacher jun., Bartholomäus, 86807 Buchloe (DE); Merz, Florian, 87668 Rieden (DE)
(74) Vertreter: Charrier Rapp & Liebau

(56) Entgegenhaltungen:
- EP-A1- 1 593 456
- DE-A1- 102016 112 924
- DE-A1- 4 201 013

## Beschreibung

Die Erfindung betrifft eine Arbeitsspindel mit einer Überwachungsvorrichtung und ein Verfahren zur Überwachung einer Arbeitsspindel.

Bei Werkzeugmaschinen kann durch Verschmutzungen an den Werkzeugauflageflächen eine suboptimale Werkzeugspannung hervorgerufen werden. Verschmutzungen können insbesondere aus Materialspänen bestehen, die bei der Bearbeitung eines Werkstücks zwangsläufig anfallen. Folglich kann es aufgrund einer Schiefstellung bzw. eines Achsversatzes des Werkzeugs zu einer mangelhaften Bearbeitung kommen. Dieser Effekt wird noch verstärkt durch den Einsatz von langen Werkzeugen. Zur Verbesserung der Fertigungsqualität und Reduktion des Ausschussanteils ist es wünschenswert, das Auftreten einer fehlerhaften Werkzeugspannung bereits vor Beginn der Bearbeitung erkennen zu können. Daher wurde bereits vorgeschlagen, bei Werkzeugmaschinen die Qualität der Werkzeugspannung durch eine Überwachung der Plananlage des Werkzeugs zu überprüfen. Aus der EP 1 889 685 B1 ist eine Überwachungsvorrichtung mit einer an der Umfangsfläche eines Spindelkopfes vorgesehenen Messvorrichtung bekannt, die an der Mantel- bzw. Umfangsfläche entstehende Schwingungen bzw. Deformationen aufgrund einer Unwucht oder Verunreinigung erfasst. Sie kann eine mechanische Messuhr sein, deren Tastkopf auf der Umfangsfläche des Spindelkopfes aufliegt, oder der Sensor kann als induktiver oder kapazitiver Sensor oder in Form eines Dehnmessstreifens auf dem Spindelkopf angeordnet sein. Des Weiteren wird eine mechanisierte, elektrische, elektromechanische, akustische oder optisch wirkende Messvorrichtung als Möglichkeit erwähnt. Mit Ausnahme der mechanischen Messuhr wird auf die konkrete Realisierung der genannten Arten von Messvorrichtungen aber nicht eingegangen. Die Anordnung des Sensors ist an einem aus dem Stator der Arbeitsspindel an dessen Vorderseite herausragenden Abschnitt des Rotors vorgesehen.

Eine mechanische Abtastung der Umfangsfläche des Rotorkopfes einer Arbeitsspindel mit einer Messuhr erfordert eine langsame Umdrehung des Rotors und eine anschließende Entfernung des Tasters von der Rotoroberfläche bei der normalen Betriebsdrehzahl. Aktive Messsysteme mit Sensorik auf dem Rotor und mit Energie- und Datenübertragung zwischen Stator und Rotor sind aufwendig zu fertigen, damit teuer und nur mit viel Aufwand zu tauschen. Durch den Einbau von Sensoren in den Rotor wird dessen mechanische Steifigkeit verringert. Messsysteme, welche einen Rundlauffehler in Werkzeugnähe messen, ragen in den Bearbeitungsraum. Dort ist ein Sensor unerwünscht weil sich Späne dort sammeln können und der Sensor schwer zu schützen ist. Ein zusätzlicher Messring auf dem Rotor ist nur schwer so anzubringen, dass er alle Verformungen erfährt. Bei einer Messung eines Rundlauffehlers weiter entfernt vom Werkzeug liegt eine entsprechend geringere Verformung des Rotors vor, wodurch die Messgenauigkeit beeinträchtigt wird.

Die DE 10 2016 112924 A1 offenbart eine Werkzeugmaschineneinheit mit einer Statoreinheit und einer Rotoreinheit, welche eine Werkzeug-Spannvorrichtung zum Fixieren und Verspannen eines Werkzeuges umfasst. Wenigstens zwei Spannkraft-Sensoren sind zur Erfassung der Spannkraft vorgesehen. Die Spannkraft-Sensoren sind als Näherungssensoren zur Erfassung eines Abstands zwischen der Rotoreinheit und der Statoreinheit ausgebildet, um die Spannkraft über eine Deformation eines Teils der Rotoreinheit zu vermessen, wobei die Spannkraft-Sensoren an zueinander verschiedenen Winkelpositionen um die Drehachse angeordnet sind, um die Position und/oder Ausrichtung der Drehachse bei einem Bearbeitungsvorgang der Werkzeugmaschine zu bestimmen. Es sind mindestens zwei bezüglich der Drehachse der Spindel um 90 Grad versetzt angeordnete Sensoren mit jeweils radialer oder axialer Empfindlichkeit vorgesehen, welche die Weite eines radialen bzw. axialen Luftspalts messen, wobei der Radialsensor ein magnetischer Sensor sein kann. Der Einbau von mindestens zwei Sensoren an zwei zueinander um 90 Grad versetzten Positionen in Umfangsrichtung und deren Verkabelung sind aufwendig.

Ausgehend hiervon ist es die Aufgabe der Erfindung, eine Arbeitsspindel mit einer Überwachungsvorrichtung und ein Verfahren zur Überwachung einer Arbeitsspindel bereitzustellen, welche die Nachteile des Standes der Technik überwinden und es ermöglichen, anhand der Messung einer Deformation des Rotorkopfes der Arbeitsspindel durch das Spannen eines Werkzeugs oder Werkzeugträgers eine fehlerhafte Werkzeugspannung mit hoher Genauigkeit und Zuverlässigkeit zu erkennen.

Diese Aufgabe wird erfindungsgemäß durch eine Arbeitsspindel mit den Merkmalen des Anspruchs 1 und durch ein Verfahren mit den Merkmalen des Anspruchs 11 gelöst. Vorteilhafte Ausgestaltungen der Erfindung sind in den jeweiligen Unteransprüchen angegeben.

Erfindungsgemäß wird bei einer Arbeitsspindel mit einer Überwachungsvorrichtung, die mindestens einen am Stator oder am Rotor der Arbeitsspindel angeordneten Magnet und mindestens einen am Stator einem Messabschnitt des Rotorkopfes radial gegenüberliegend angeordneten Magnetfeldsensor aufweist, der Messabschnitt von dem Magnetfeld des Magneten durchsetzt und bei einer Spannung eines Werkzeugs oder Werkzeugträgers am Rotorkopf mittels einer in dem Rotor angeordneten Werkzeugspannvorrichtung von einem axialen Kraftfluss durchsetzt. Der Rotorkopf weist in seinem Messabschnitt eine in Axialrichtung variierende Magnetisierbarkeit oder Magnetisierung auf und der Magnetfeldsensor ist richtungsempfindlich und mit einer Auswertungseinrichtung verbunden, welche dazu eingerichtet ist, aus der von dem Magnetfeldsensor während einer Umdrehung des Rotors erfassten Stärke des Magnetfeldes als Funktion des Drehwinkels ein Maß für die axiale Deformation des Rotorkopfes als Funktion des Drehwinkels zu ermitteln.

Auf diese Weise kann sowohl die mittlere axiale Deformation des Rotorkopfes in Umfangsrichtung ermittelt werden, die von der Spannkraft der Werkzeugspannvorrichtung abhängt, wodurch deren Überwachung ermöglicht wird, als auch eine Variation der Deformation in Umfangsrichtung festzustellen, die ein klares Indiz für das Vorhandensein einer Verunreinigung einer Kontaktfläche zwischen einem gespannten Werkzeug oder Werkzeugträger und dem Rotorkopf, insbesondere in Form eines Spans auf der stirnseitigen Plananlagefläche des Rotorkopfes ist. Ein Magnetfeldsensor arbeitet berührungslos und erfordert keine Signalübertragung zwischen Rotor und Stator. Der Sensor und die gesamte Signalverarbeitungselektronik können im Inneren des Stators an einer Stelle untergebracht werden, wo sie gegen Verschmutzung und mechanische Einwirkungen jeglicher Art geschützt sind.

Darüber hinaus ist es vorteilhaft, wenn die Auswertungseinrichtung dazu eingerichtet ist, aus der von dem Magnetfeldsensor während einer Umdrehung des Rotors erfassten Stärke des Magnetfeldes als Funktion des Drehwinkels ein Maß für die axiale Position des Rotorkopfes relativ zum Stator zu ermitteln. Auf diese Weise kann mittels desselben Sensors zusätzlich die als Spindelwachstum bekannte systematische axiale Verlagerung des Rotors gegenüber dem Stator im Betrieb einer Arbeitsspindel erfasst werden, deren Ausmaß zu ihrer Kompensation bei der axialen Werkzeugpositionierung bekannt sein muss.

Bevorzugt ist am Stator dem Messabschnitt des Rotorkopfes radial gegenüberliegend der mindestens eine Magnet mit radialer Ausrichtung seiner Pole angeordnet und der Messabschnitt des Rotorkopfes weist an seiner Oberfläche mindestens zwei in Umfangsrichtung verlaufende und in Axialrichtung voneinander beabstandete Nuten auf. Durch diesen Aufbau kann in einfacher Weise eine starke Verzerrung eines Magnetfeldes am Ort des Sensors durch eine axiale Deformation und/oder Verlagerung des Rotorkopfes bewirkt werden.

Solche Nuten weisen bevorzugt mindestens an einer Stelle in Umfangsrichtung des Messabschnitts des Rotorkopfes eine Markierung vorbestimmter Länge in Umfangsrichtung in Form einer Unterbrechung oder eines axialen Versatzes vorbestimmten Ausmaßes auf. Hierdurch wird eine Nullpunktsreferenz für den Drehwinkel des Rotorkopfes geschaffen, die durch den Magnetfeldsensor selbst erfasst werden kann, so dass hierfür keine zusätzliche Sensorik benötigt wird. Wenn als Markierung ein axialer Versatz vorbestimmten Ausmaßes verwendet wird, ergibt sich zusätzlich die Möglichkeit einer Selbstkalibrierung des Magnetfeldsensors, indem der beim Passieren des versetzten Nutabschnitts auftretenden Signaländerung eine axiale Verschiebung bekannter Größe zugeordnet werden kann.

Alternativ zu einem Magnet am Stator und Nuten im Rotorkopf kann der mindestens eine Magnet aus mindestens drei im Messabschnitt des Rotorkopfes axial aufeinanderfolgend angeordneten Magneten oder aus mindestens drei axial aufeinanderfolgenden magnetisierten Bereichen des Rotorkopfes bestehen, wobei die Magnetpole jeweils in radialer Richtung ausgerichtet sind und jeweils zwei axial aufeinanderfolgende Magnete oder magnetisierte Bereiche eine umgekehrte radiale Anordnung der Magnetpole haben. Auch hierdurch ergibt sich eine axiale Verzerrung eines den Magnetfeldsensor durchsetzenden Magnetfeldes bei einer axialen Deformation oder Verschiebung des Rotorkopfes.

In Analogie zu einer Unterbrechung oder einem axialen Versatz vorbestimmten Ausmaßes von Nuten können im Messabschnitt des Rotorkopfes angeordnete Magnete oder magnetisierten Bereiche mindestens an einer Stelle in Umfangsrichtung des Messabschnitts des Rotorkopfes eine Markierung vorbestimmter Länge in Umfangsrichtung in Form einer Unterbrechung der Magnetisierung oder eines axialen Versatzes vorbestimmten Ausmaßes der Magnetisierung aufweisen, um eine Nullpunktsreferenz für den Drehwinkel des Rotors zu schaffen bzw. eine Selbstkalibrierung des Magnetfeldsensors zu ermöglichen.

Vorzugsweise ist der Magnetfeldsensor ein magnetoresistiver Sensor, der mindestens eine Brückenschaltung aus Widerständen aufweist, deren Wert jeweils von der Stärke und Richtung eines sie durchsetzenden Magnetfeldes abhängt, die axiale Variation der Magnetisierbarkeit oder Magnetisierung des Messabschnitts des Rotorkopfes ist periodisch, und die geometrische Anordnung der Widerstände ist in axialer Richtung so auf diese axiale Variation abgestimmt, dass eine axiale Verschiebung des Rotorkopfes gegenüber dem Stator um eine Periodenlänge der axialen Variation einen periodischen Verlauf des Ausgangssignals der Brückenschaltung als Funktion der axialen Verschiebung des Rotorkopfes mit gleicher Periodenlänge zur Folge hat.

Magnetoresistive Sensoren haben eine hohe Empfindlichkeit und eine ausgeprägte Richtungsabhängigkeit, wie sie für die erfindungsgemäße Anwendung erforderlich sind. Dies erlaubt eine Positions- und Deformationsmessung mit sehr hoher Auflösung im Nanometerbereich. Durch die Abstimmung zwischen dem Aufbau des Sensors und der axialen Variation der Magnetisierbarkeit bzw. Magnetisierung wird die Umrechnung einer Änderung des Sensorsignals in eine Positionsänderung bzw. Deformation stark vereinfacht.

Die Auswertungseinrichtung enthält vorzugsweise einen Speicher, in dem ein Referenzsignal gespeichert ist, welches aus mindestens einem bei einer Umdrehung des Rotors mit einem fehlerfrei gespannten Werkzeug oder Werkzeugträger aufgezeichneten Sensorsignal abgeleitet wurde, und sie ist dazu eingerichtet, die axiale Deformation des Rotorkopfes anhand der Abweichung zwischen einem Signal, welches aus mindestens einem bei einer Umdrehung des Rotors mit einem gespannten Werkzeug oder Werkzeughalter aufgezeichneten Sensorsignal abgeleitet wurde, und dem gespeicherten Referenzsignal zu ermitteln. Hierdurch können Störeinflüsse wie das Rauschen eines erfassten Messsignals, womit hier kein zeitliches, sondern ein räumliches Rauschen gemeint ist, oder ein systematischer Offset eines erfassten Messsignals, weitgehend eliminiert werden.

Bevorzugt ist die Auswertungseinrichtung dazu eingerichtet, aus der axialen Deformation des Rotorkopfes ein Signal abzuleiten, welches einen fehlerhaften Spannzustand eines Werkzeugs oder Werkzeugträgers anzeigt. Ein solcher fehlerhafter Spannzustand kann entweder in einer Verunreinigung einer Werkzeuganlagefläche des Rotorkopfes oder in einer unzureichenden Spannkraft infolge eines Defekts oder eines übermäßigen Verschleißes der Werkzeugspannvorrichtung bestehen.

Am Stator können dem Messabschnitt des Rotorkopfes radial gegenüberliegend auch eine Vielzahl von richtungsempfindlichen Magnetfeldsensoren voneinander in Umfangsrichtung des Stators beabstandet angeordnet und jeweils mit der Auswertungseinrichtung verbunden sein. Hierdurch kann die Messung beschleunigt werden, indem keine ganze Umdrehung des Rotors nötig ist, um die axiale Position des Messabschnitts des Rotorkopfes über den gesamten Umfang des Rotorkopfes zu erfassen, oder die Messung kann an einer Vielzahl von Punkten entlang des Umfangs des Rotorkopfes gleichzeitig im Stillstand des Rotors durchgeführt werden.

Ein erfindungsgemäßes Verfahren zur Überwachung einer erfindungsgemäßen Arbeitsspindel weist folgende Schritte auf:
a) Aufzeichnen mindestens eines Signals, welches mit einem am Rotor der Arbeitsspindel gespannten Werkzeug oder Werkzeugträger aus mindestens einem von einem Magnetfeldsensor innerhalb einer Umdrehung des Rotors abgegebenen Signal abgeleitet wird;
b) Berechnen eines Positionssignals, welches die axiale Position eines dem Magnetfeldsensor radial gegenüberliegenden Messabschnitts des Rotorkopfes als Funktion des Drehwinkels des Rotors innerhalb einer Umdrehung desselben angibt, aus dem aufgezeichneten Signal;
c) Berechnung eines Differenzsignals als Funktion des Drehwinkels des Rotors innerhalb einer Umdrehung desselben aus dem berechneten Positionssignal und einem in einem Speicher gespeicherten Referenzsignal;
d) Ermittlung mindestens eines Maßes für die axiale Deformation des Rotorkopfes aus dem berechneten Differenzsignal,
e) Vergleich des ermittelten Maßes für die axiale Deformation des Rotorkopfes mit einem Grenzwert und Abgabe eines Zustandssignals, welches einen fehlerhaften Spannzustand eines gespannten Werkzeugs oder Werkzeugträgers anzeigt, in Abhängigkeit von dem Vergleichsergebnis.

Durch die Differenzbildung zwischen dem aus erfassten Messwerten berechneten Positionssignal und einem gespeicherten Referenzsignal können Störeffekte weitgehend eliminiert werden und ein zuverlässiges Maß für die Deformation des Rotorkopfes ermittelt werden, anhand dessen durch einen Vergleich mit einem Grenzwert in einfacher Weise beurteilt werden kann, ob der Spannzustand des Werkzeugs oder Werkzeugträgers korrekt oder fehlerhaft ist.

Bevorzugt wird das Referenzsignal durch Anwendung der Schritte a) und b) bei einer fehlerfreien Spannung eines gleichartigen Werkzeugs oder Werkzeugträgers ermittelt und in dem Speicher gespeichert. Hierdurch wird in einfacher Weise ein Kriterium zur Bewertung eines aktuellen Spannzustandes als korrekt oder fehlerhaft definiert.

Bei der Durchführung des Schrittes c) wird vorzugsweise der jeweilige Mittelwert des Positionssignals und des Referenzsignals berechnet und von jedem der beiden Signale zunächst sein Mittelwert subtrahiert. Anschließend wird zur Berechnung des Differenzsignals das mittelwertfreie Referenzsignal vom mittelwertfreien Positionssignal subtrahiert und das Zustandssignal zeigt das Vorhandensein einer Verunreinigung zwischen einem gespannten Werkzeug oder Werkzeugträger und einer Oberfläche des Rotorkopfes an. Durch die Subtraktion der jeweiligen Mittelwerte spielt ein systematischer Offset im Sensorsignal keine Rolle für die Genauigkeit der Berechnung der Abweichung zwischen dem aktuellen Positionssignal und dem Referenzsignal.

Wenn bei der Ermittlung des Referenzsignals die Schritte a) und b) ein erstes Mal ohne axiale Kraftbeaufschlagung des Rotorkopfes und ein zweites Mal mit fehlerfrei gespanntem gleichartigem Werkzeug oder Werkzeugträger durchgeführt werden, das Referenzsignal durch Subtraktion des bei der ersten Durchführung erhaltenen Positionssignals von dem bei der zweiten Durchführung erhaltenen Positionssignal berechnet wird, bei der Durchführung des Schrittes c) der jeweilige Mittelwert des Positionssignals und des Referenzsignals berechnet wird und zur Berechnung des Differenzsignals der Mittelwert des Referenzsignals vom Mittelwert des Positionssignals subtrahiert wird, kann ein Zustandssignal erzeugt werden, welches die Ausübung einer unzureichenden Spannkraft durch die Werkzeugspannvorrichtung anzeigt. Unter Verwendung derselben Messvorrichtung kann somit allein durch die Durchführung einer zusätzlichen Messung und eine Erweiterung der Signalverarbeitung eine weitere Art einer Fehlfunktion der Werkzeugspannung erkannt werden.

Indem die Schritte a) und b) ohne axiale Kraftbeaufschlagung des Rotorkopfes in einem definieren Referenzzustand der Arbeitsspindel durchgeführt werden, der Mittelwert des erhaltenen Positionssignals berechnet und als Referenzmittelwert gespeichert wird, die Schritte a) und b) ohne axiale Kraftbeaufschlagung des Rotorkopfes in einem aktuellen Betriebszustand der Arbeitsspindel durchgeführt werden und der aktuelle Mittelwert des erhaltenen Positionssignals berechnet wird, kann eine axiale Verschiebung des Rotorkopfes relativ zum Stator durch Subtraktion des Referenzmittelwertes vom aktuellen Mittelwert berechnet und an eine übergeordnete Steuereinheit übermittelt werden. Unter Verwendung derselben Messvorrichtung kann somit allein durch eine Erweiterung der Signalverarbeitung eine weitere für den Betrieb einer Arbeitsspindel bedeutsame Zustandsinformation in Form einer axialen Verlagerung des Rotorkopfes erfasst und eine Verschlechterung der Qualität der Werkstückbearbeitung vermieden werden.

Nachfolgend wird ein Ausführungsbeispiel der Erfindung anhand der Zeichnungen beschrieben. In diesen zeigt
- Fig. 1: den vorderen Teil einer Arbeitsspindel mit einem gespanntem Werkzeugträger,
- Fig. 2: eine vergrößerte Ansicht des Ausschnitts A von Fig. 1,
- Fig. 3: ein elektrisches Blockschaltbild einer erfindungsgemäßen Vorrichtung,
- Fig. 4: eine vergrößerte Ansicht des Ausschnitts B von Fig. 2,
- Fig. 5: die zwei Messsignale des Sensors einer erfindungsgemäßen Vorrichtung,
- Fig. 6: die Messsignale von Fig. 5 für drei verschiedene Fälle nach einer Tiefpassfilterung,
- Fig. 7: die aus den gefilterten Messsignalen von Fig. 6 errechnete axiale Position des Rotorkopfes,
- Fig. 8: die aus der Position von Fig. 7 und einem gespeicherten Referenzsignal errechnete axiale Deformation des Rotorkopfes und
- Fig. 9: eine Darstellung der erfindungsgemäßen Verarbeitung von Sensorsignalen zur Detektion einer Verunreinigung in Form eines Programmablaufplans.

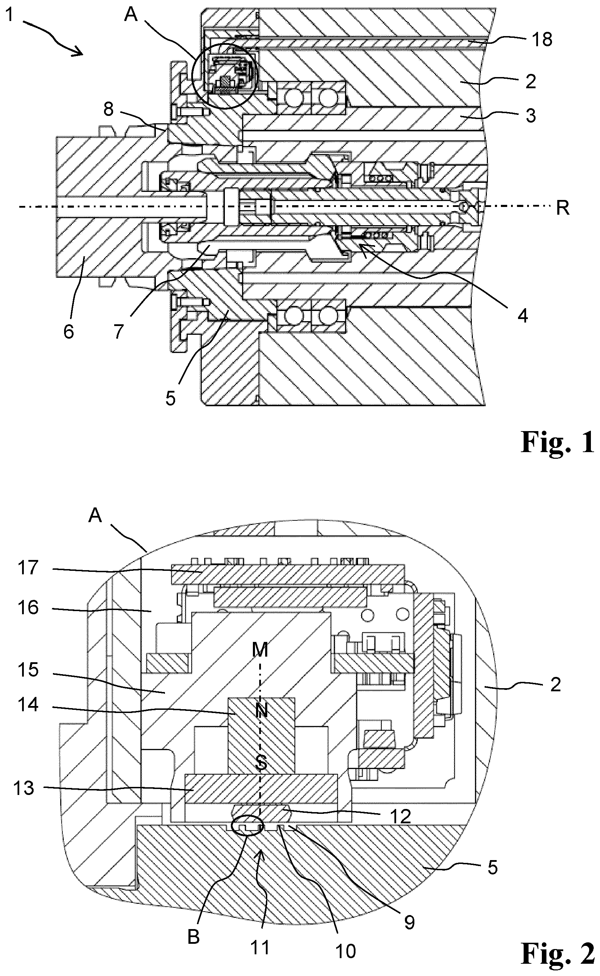

Fig. 1 zeigt den vorderen Endabschnitt einer Arbeitsspindel 1, deren Hauptkomponenten ein Stator 2 und ein in diesem gelagerter Rotor 3 sind. In dem Rotor 3 befindet sich eine Werkzeugspannvorrichtung 4, mittels derer an einem vorderen Endabschnitt 5 des Rotors 3, der nachfolgend als Rotorkopf 5 bezeichnet wird, ein Werkzeugträger 6 gespannt ist. Dieser Aufbau einer Arbeitsspindel 1 ist in Fachkreisen bekannt und bedarf daher hier keiner weiteren Erläuterung. Die Werkzeugspannvorrichtung 4 hat entlang ihres Umfangs eine Vielzahl von Spannzangen 7, die auf den Werkzeugträger 6 eine in Umfangsrichtung gleichmäßig verteilte Spannkraft ausüben, welche über die Plananlagefläche 8 in Axialrichtung auf den Rotorkopf 5 einwirkt.

Das Vorhandensein einer Verunreinigung, insbesondere in Form eines Spans auf der Plananlagefläche 8, verursacht eine Unregelmäßigkeit der Spannkraftverteilung in Umfangsrichtung und damit auch eine entsprechende Unregelmäßigkeit der elastischen Verformung des Rotorkopfes 5. Diese Unregelmäßigkeit der Verformung des Rotorkopfes 5 hat sowohl eine radiale, als auch eine axiale Komponente, wobei sich die Begriffe axial und radial hier stets auf die Rotationsachse R der Arbeitsspindel beziehen. Erfindungsgemäß wird die axiale Komponente einer solchen unregelmäßigen Verformung des Rotorkopfes 5 gemessen. Der Aufbau der Messvorrichtung wird nachfolgend anhand Fig. 2 beschrieben, die eine Vergrößerung des in Fig. 1 mit A markierten Ausschnitts des vorderen Endabschnitts der Arbeitsspindel 1 zeigt.

Auf der Seite des Rotorkopfes 5 besteht die Messvorrichtung, wie Fig. 2 zeigt, aus einer Reihe von axial voneinander beabstandeten Nuten 9 in Umfangsrichtung an der Mantelfläche des Rotorkopfes 5. Jeweils zwei benachbarte Nuten 9 sind durch einen ebenfalls in Umfangsrichtung verlaufenden Steg 10 voneinander getrennt. Alle Nuten 9 haben die gleiche Breite. Dies gilt auch für die Stege 10, so dass sich insgesamt in Axialrichtung eine periodische Abfolge von Nuten 9 und Stegen 10 ergibt. In dem in Fig. 2 gezeigten Beispiel sind vier Nuten 9 und drei Stege 10 vorgesehen. Die Nuten 9 und Stege 10 definieren zusammen einen Messabschnitt 11 des Rotorkopfes. Es ist wesentlich, dass der Messabschnitt 11 in einem Bereich des Rotorkopfes 5 liegt, der bei der Spannung eines Werkzeugs oder Werkzeugträgers 6 von einem Kraftfluss in axialer Richtung durchsetzt ist, damit durch besagte Spannung eine elastische Verformung des Messabschnitts 11 in axialer Richtung erfolgt. Diese ist bei fehlerfreier Werkzeugspannung entlang des Umfangs des Rotorkopfes 5 annähernd gleich, während sie im Falle einer Verunreinigung entlang des Umfangs des Rotorkopfes 5 unregelmäßig variiert.

Auf der Seite des Stators 2 enthält die Messvorrichtung einen Magnetfeldsensor 12, der in Form eines Chips auf einer Leiterplatte 13 aufgebaut ist, welche so in einen Hohlraum im Stator 2 eingebaut ist, dass der Magnetfeldsensor 12 dem Messabschnitt 11 des Rotorkopfes 5 radial gegenüberliegt und nur durch einen schmalen radialen Spalt von diesem getrennt ist. Auf der radial äußeren Seite der Leiterplatte 13 ist ein Permanentmagnet 14 symmetrisch zu dem Magnetfeldsensor 12 so angeordnet, dass sein Magnetfeld in seinem Inneren in radialer Richtung verläuft. In dem in Fig. 2 gezeigten Beispiel befindet sich der Südpol des Permanentmagneten 14 an seinem radial inneren Ende und der Nordpol an seinem radial äußeren Ende. Dementsprechend würden die magnetischen Feldlinien durch die Leiterplatte 13 und den Sensorchip 12 hindurch ohne die besondere Formgebung des Messabschnitts 11 des Rotorkopfes 5 ebenfalls annähernd radial und zumindest symmetrisch zu einer gemeinsamen radialen Mittelachse M des Magnetfeldsensors 12 und des Permanentmagenten 14 verlaufen.

Durch die Nuten 9 und Stege 10 des Messabschnitts 11 wird das Magnetfeld des Permanentmagneten 14 zwar im Bereich des Magnetfeldsensors 12 in axialer Richtung verzerrt, jedoch ist ohne eine Verformung des Rotorkopfes 5 oder bei einer entlang des Umfangs des Rotorkopfes 5 gleichmäßigen Verformung des Rotorkopfes 5 in axialer Richtung die Verzerrung entlang des gesamten Umfangs des Rotorkopfes 5 gleichmäßig. Wenn die axiale Verformung des Rotorkopfes 5 im Falle einer Verunreinigung, sie wie das Vorhandensein eines Spans auf der Plananlagefläche 8 (Fig. 1) beim Spannen eines Werkzeugs oder Werkzeugträgers 6 darstellt, entlang des Umfangs des Rotorkopfes 5 ungleichmäßig ist, dann ist es auch die Verzerrung des Magnetfeldes durch den Messabschnitt 11.

Die Verzerrung des Magnetfeldes ist abhängig von der Position der Nuten 9, wenn das Material, aus dem der Rotorkopf 5 besteht, eine hohe magnetische Permeabilität besitzt, insbesondere ferromagnetisch ist, wovon bei einem Rotorkopf 5 einer Arbeitsspindel 1 einer Werkzeugmaschine in der Regel ausgegangen werden kann. Zur Vermeidung von Verunreinigungen können die Nuten 9 mit einem nichtmagnetischen Material, insbesondere einem Kunststoff, gefüllt sein.

Die axiale Verzerrung des Magnetfeldes durch den Messabschnitt 11 wird erfindungsgemäß mithilfe des Magnetfeldsensors 12, der eine stark richtungsabhängige Empfindlichkeit hat, gemessen. Die Leiterplatte 13 mit dem Magnetfeldsensor 12 und dem Permanentmagneten 14 ist in ein Gehäuse 15 eingebaut, das seinerseits in einen Hohlraum 16 in dem Stator 2 eingebaut ist, und an dessen Rückseite eine Signalverarbeitungselektronik 17 angebaut ist. Von dieser führt ein Kabel 18 (Fig. 1) aus dem Stator 2 der Arbeitsspindel 1 heraus zur Maschinensteuerung der Bearbeitungsmaschine, deren Bestandteil die Arbeitsspindel 1 ist. Eine Signalübertragung vom Rotor 3 zum Stator 2 ist daher nicht erforderlich.

Eine bekannte Art eines richtungsempfindlichen Magnetfeldsensors 12 ist ein magnetoresistiver Sensor, bei dem der Wert eines elektrischen Widerstandes stark von der Richtung eines ihn durchsetzenden Magnetfeldes abhängt. Solche magnetoresistiven Sensoren sind als solche bekannt und auf dem Markt erhältlich, und zwar bevorzugt in Form von vier Widerständen, die so zu einer Brückenschaltung verschaltet sind, dass deren Ausgangssignal proportional zur Stärke eines Magnetfeldes in der Empfindlichkeitsrichtung des Magnetfeldsensors 12 ist. Üblicherweise sind zwei solche Brückenschaltungen von magnetfeldempfindlichen Widerständen zusammen auf einem Chip in einer bestimmten geometrischen Anordnung vorgesehen, die nachfolgend erläutert wird.

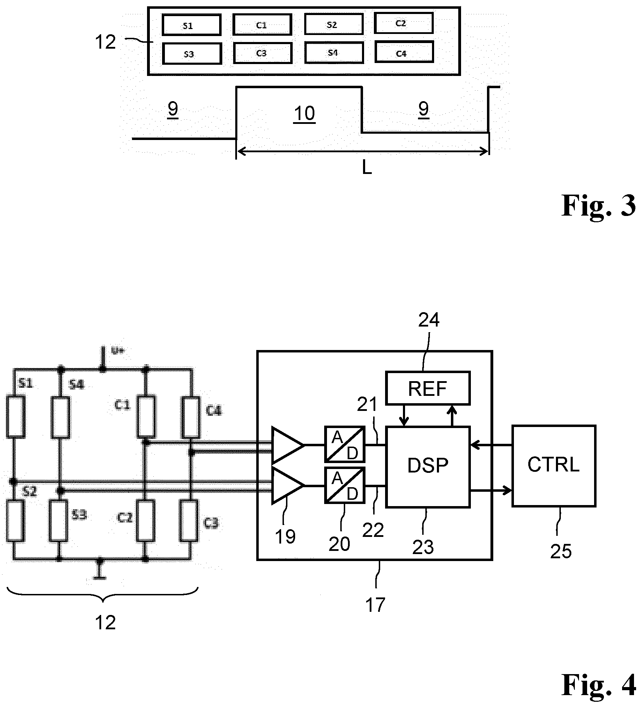

Fig. 3 zeigt einen Ausschnitt des Messabschnitts 11 des Rotorkopfes 5 mit einer Periode der Länge L der Abfolge von Nuten 9 und Stegen 10. Der Magnetfeldsensor 12 enthält zwei magnetoresistive Brückenschaltungen, deren jeweilige Widerstände S1 bis S4 und C1 bis C4, wie in Fig. 3 schematisch dargestellt, so in Richtung der zu messenden Position des Messabschnitts 11, d.h. hier in Axialrichtung des Rotorkopfes 5 verschachtelt angeordnet sind, dass in dieser Richtung auf einen Widerstand Sn der einen Brückenschaltung stets der entsprechende Widerstand Cn der anderen Brückenschaltung folgt, wobei jeweils zwei Widerstände jeder Brückenschaltung übereinander angeordnet sind.

Hierbei sind die Länge der gesamten Widerstandsanordnung in Richtung der zu messenden Position des Messabschnitts 11 und die Periodenlänge L der Abfolge von Nuten 9 und Stegen 10 so aufeinander abgestimmt, dass bei einer Verschiebung des Messabschnitts 11 um eine Periodenlänge L die eine Brückenschaltung aus den Widerständen S1 bis S4 eine Periode eines sinusförmigen Ausgangssignals und die andere Brückenschaltung aus den Widerständen C1 bis C4 eine Periode eines um 90° phasenverschobenen, also cosinusförmigen Ausgangssignals abgibt. Aus den beiden Brückenausgangssignalen kann in diesem Fall unter Anwendung der bekannten Funktion arctan2 ein innerhalb einer Periodenlänge L linear von der axialen Position des Messabschnitts 11 abhängiges Ausgangssignal erzeugt werden.

Dieses Konzept einer Wegmessung ist an sich bekannt und bedarf daher hier keiner weiteren Erläuterung. Es wird üblicherweise zur Messung von großen Verschiebungswegen, die ein Vielfaches der Periodenlänge L betragen, oder zur Drehzahlmessung an Zahnrädern verwendet. Erfindungsgemäß wird das Konzept jedoch zur Messung kleinster Deformationen im Nanometerbereich entlang des Umfangs eines Rotorkopfes 5 einer Arbeitsspindel 1 verwendet, was im Vergleich zu den bisher bekannten Anwendungen eine massive Zweckentfremdung darstellt. Hierzu ist eine andere Art der Signalverarbeitung nötig als zur Messung von großen Verschiebungswegen oder von Drehzahlen. Diese spezielle Art der Signalverarbeitung wird nachfolgend beschrieben.

Ein Blockschaltbild eines Magnetfeldsensors 12 mit zwei Brückenschaltungen auf einem Chip ist mit einer erfindungsgemäßen Signalverarbeitungselektronik 17 in Fig. 4 dargestellt. Beide Brückenausgangssignale werden jeweils zunächst durch einen Verstärker 19 verstärkt, dann durch einen Analog-/Digital-Wandler 20 in digitale Signale 21 bzw. 22 gewandelt, die einer digitalen Signalverarbeitungseinheit 23 zugeführt werden. Diese ist mit einem Speicher 24, in dem ein im Weiteren noch zu definierendes Referenzsignal gespeichert ist, und mit einer Steuereinheit 25 der Bearbeitungsmaschine, deren Bestandteil die Arbeitsspindel 1 ist, verbunden.

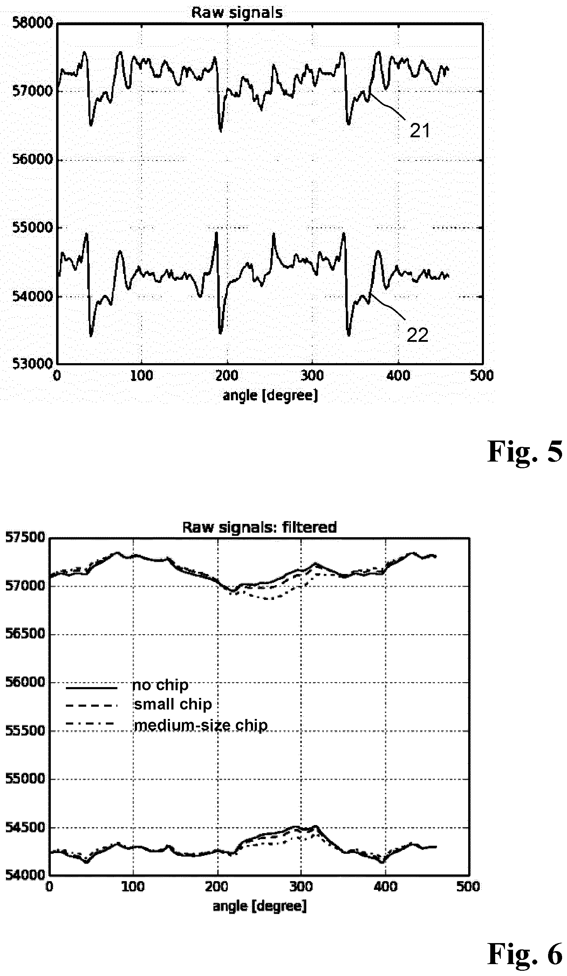

Ein Beispiel für gemessene Verläufe dieser Rohsignale 21 und 22 als Funktion des Drehwinkels des Rotors 3 der Arbeitsspindel 1 über etwas mehr als eine ganze Umdrehung zeigt Fig. 5. Es ist erkennbar, dass beide Signale 21 und 22 stark verrauscht sind, was von der Unregelmäßigkeiten der Oberfläche des Messabschnitts 11 des Rotorkopfes 5 herrührt. Diese Unregelmäßigkeiten wirken auf beide Signale 21 und 22 gleichermaßen, wie die deutlich sichtbare Ähnlichkeit der beiden Signale 21 und 22 zeigt. Diese Rohsignale 21 und 22 sind noch nicht proportional zu einer axialen Deformation des Messabschnitts 11 des Rotorkopfes 5. Die erste Operation, die in der digitalen Signalverarbeitungseinheit 23 durchgeführt wird, ist eine Tiefpassfilterung der Sensorsignale 21 und 22, wobei die Variable hier nicht die Zeit, sondern der Drehwinkel des Rotors 3 ist, d.h. es handelt sich um eine räumliche Filterung zur Unterdrückung eines räumlichen Rauschens.

Ein Beispiel für Verläufe der Signale 21 und 22 als Funktion des Drehwinkels des Rotors 3 der Arbeitsspindel 1 über etwas mehr als eine ganze Umdrehung nach der Tiefpassfilterung zeigt Fig. 6, wobei dort jeweils drei verschiedene Signalverläufe dargestellt sind, nämlich als durchgehende Linie der Verlauf bei störungsfreier Werkzeugspannung, d.h. ohne Verunreinigung der Plananlagefläche 8, als gestrichelte Linie der Verlauf bei Verunreinigung der Plananlagefläche 8 durch einen kleinen Span und als strichpunktierte Linie der Verlauf bei Verunreinigung der Plananlagefläche 8 durch einen Span mittlerer Größe. Wie aus Fig. 6 ersichtlich ist, wird das starke Rauschen durch die Tiefpassfilterung weitgehend eliminiert und es bestehen zwischen den Verläufen der drei verschiedenen Fälle signifikante Abweichungen insbesondere im Drehwinkelbereich zwischen ungefähr 220° und 320° bei beiden Signalen.

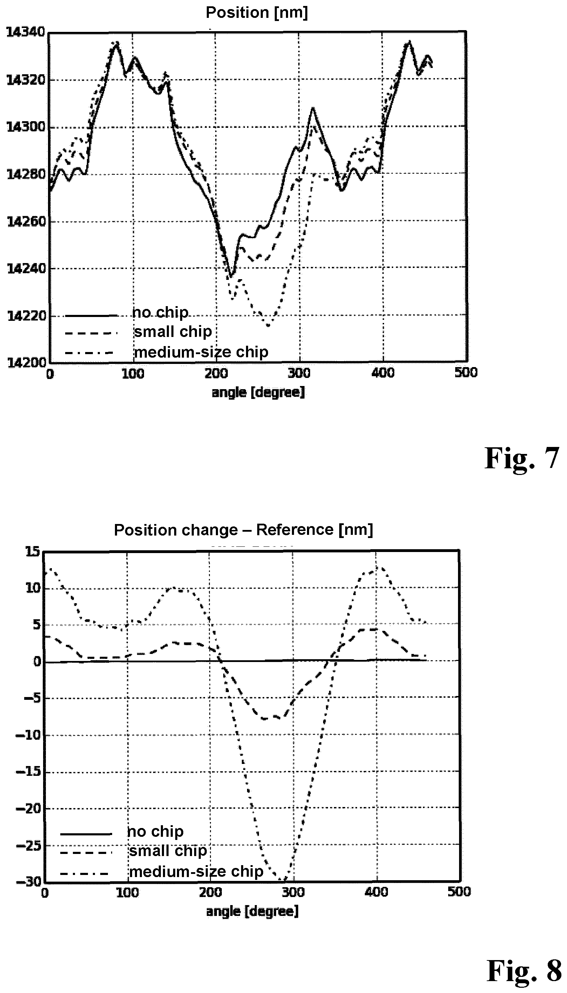

Aus den beiden tiefpassgefilterten Signalen von Fig. 6 wird in der digitalen Signalverarbeitungseinheit 23 anschließend unter Verwendung der arctan2-Funktion ein Positionssignal berechnet, dessen Verlauf als Funktion des Drehwinkels des Rotors 3 der Arbeitsspindel 1 wiederum für die drei vorausgehend erwähnten Fälle in Fig. 7 dargestellt ist. Die bereits anhand der beiden einzelnen Signale in Fig. 6 erkennbaren Abweichungen zwischen den drei verschiedenen Fällen treten in dem Positionssignal von Fig. 6 noch deutlicher zutage, wobei sichtbar wird, dass sich die Abweichungen nicht nur auf den Bereich zwischen ca. 220° und 320° beschränken, wenngleich sie dort am größten sind. Während die Skalen der Ordinaten in den Figuren 5 und 6 noch digitalisierte Spannungswerte sind, ist die Einheit der Ordinate von Fig. 7 Nanometer, wobei es dort weniger der Absolutwert, sondern vor vielmehr dessen Änderung über eine Umdrehung des Rotors 3, also über einen Drehwinkel von 360° von Bedeutung ist.

Wie aus Fig. 7 ersichtlich ist, ist das Positionssignal periodisch und hat in allen drei Fällen einen ähnliches Verlauf, wobei die durch einen an der Plananlagefläche 8 eingeklemmten Span verursachte Abweichung gegenüber dem Verlauf bei verunreinigungsfreier Werkzeugspannung von der Größe des Spans abhängt. Um diese Abweichung allein als Signal zu extrahieren, wird zunächst der Mittelwert des Positionssignals von Fig. 7 über eine ganze Umdrehung des Rotors 3 berechnet und von dem Positionssignal von Fig. 7 subtrahiert, um so ein Positionsänderungssignal mit dem Mittelwert Null zu erhalten. Von diesem mittelwertfreien Positionsänderungssignal wird anschließend ein in einem Speicher 24 (Fig. 3) gespeichertes Referenzsignal subtrahiert. Bei diesem handelt es sich um dasjenige Signal, welches sich aus dem in Fig. 7 als durchgehende Linie dargestellten Positionssignal durch Subtraktion seines Mittelwertes ergibt, d.h. um das mittelwertfreie Positionsänderungsssignal im Fall einer verunreinigunghsfreien Werkzeugspannung.

Das Ergebnis dieser Operation ist in Fig. 8 dargestellt. Für den Fall einer korrekten Werkzeugspannung ergibt sich als Signalverlauf logischerweise die Nulllinie, da in diesem Fall das Referenzsignal von sich selbst subtrahiert wird. Bei Vorliegen einer Verunreinigung ergeben sich über eine gesamte Umdrehung des Rotors 3 signifikante Abweichungen des Signalverlaufs von der Nulllinie auch bereits bei einer Verunreinigung durch einen kleinen Span. Die Einheit der Ordinate ist auch in Fig. 8 Nanometer, d.h. es können erfindungsgemäß auch kleinste axiale Deformationen zuverlässig und genau erkannt werden.

Für die Genauigkeit des in Fig. 8 gezeigten Verlaufs der Differenz aus dem Positionsänderungssignal und dem gespeicherten Referenzsignal ist es von wesentlicher Bedeutung, dass das zu analysierende Signal richtig mit dem gespeicherten Referenzsignal synchronisiert wird, d.h. dass Wertepaare beider Signale voreinander subtrahiert werden, die exakt der gleichen Winkelposition des Rotors 3 zugeordnet sind. Dies kann dadurch sichergestellt werden, dass ausgehend von einer bekannten Näherung der korrekten punktweisen Zuordnung der beiden Signale für verschiedene Verschiebungen der beiden Signale relativ zueinander jeweils deren Kreuzkorrelationsfunktion berechnet wird und für die Subtraktion diejenige Zuordnung von Wertepaaren gewählt wird, bei welcher die Kreuzkorrelationsfunktion ein Maximum hat.

Eine Näherung der korrekten punktweisen Zuordnung der beiden Signale kann beispielsweise anhand einer Markierung an einer Stelle des Umfangs des Messabschnitts 11 des Rotorkopfes 5, die einen charakteristischen Impuls im Ausgangssignal des Magnetfeldsensors 12 erzeugt, erhalten werden. Eine einfache Art einer solchen Markierung ist eine Unterbrechung kurzer Länge der Nuten 9 oder ein axialer Versatz kurzer Länge der Nuten 9 und Stege 10. Beide Strukturen haben bei einer Umdrehung des Rotors 5 eine einen kurzen Abschnitt von charakteristischer Form sowohl in einem zu analysierenden Signal, als auch in einem gespeicherten Referenzsignal zur Folge, der näherungsweise Aufschluss über die korrekte punktweise Zuordnung der beiden Signale gibt.

Wenn diese Markierung die Form eines axialen Versatzes genau definierten Ausmaßes der Nuten 9 und Stege 10 hat, dann kann sie außer zur näherungsweisen Synchronisation zwischen einem aktuell erfassten Positionssignal und einem gespeicherten Referenzsignal auch zu einer automatischen Kalibration der Positionsbestimmung verwendet werden, da in diesem Fall genau bekannt ist, welcher axialen Positionsänderung des Rotorkopfes 5 die an der Versatzflanke der Nuten 9 und Stege 10 auftretende Änderung des Sensorsignals entsprechen würde.

Abschließend muss das in Fig. 8 gezeigte Differenzsignal daraufhin bewertet werden, ob seine Abweichung von der Nulllinie so signifikant ist, dass sie das Vorhandensein einer Verunreinigung auf der Plananlagefläche anzeigt. Ein einfaches Bewertungskriterium ist die Überschreitung eines Schwellwertes durch den Betrag des Differenzsignals bei einem beliebigen Wert des Drehwinkels. Ein anderes mögliches Kriterium ist die Überschreitung eines Schwellwertes durch den Mittelwert des Betrags des Differenzsignals über eine ganze Umdrehung. Diese Kriterien können auch in Form einer logischen Verknüpfung (z.B. UND, ODER) miteinander kombiniert werden, um die Zuverlässigkeit der Fehlererkennung zu erhöhen.

Zusammenfassend ist die Funktionsweise der erfindungsgemäßen Verarbeitung der von dem Magnetfeldsensor 12 erfassten Signale in der digitalen Signalverarbeitungseinheit 23 zur Detektion einer Verunreinigung in Fig. 10 in Form einer Programmablaufplans dargestellt. Wenn ein Messzyklus gestartet wurde, was insbesondere durch ein entsprechendes Steuersignal der Steuereinheit 25 ausgelöst werden kann, werden in Schritt 26 die beiden Signale 21 und 22 des Magnetfeldsensors 12 über eine ganze Umdrehung des Rotors 3 der Arbeitsspindel 1 aufgezeichnet. In Schritt 27 werden die Signale einer räumlichen Tiefpassfilterung unterzogen und in Schritt 28 aus den zwei gegeneinander phasenverschobenen Signalen ein einziges Signal berechnet, welches die axiale Position des Messabschnitts 11 des Rotorkopfes 5 angibt. In Schritt 29 wird von diesem Positionssignal sein Mittelwert über eine ganze Umdrehung des Rotors 3 subtrahiert.

Das so erhaltene mittelwertfreie Positionsänderungssignal wird in Schritt 30 anhand einer Kreuzkorrelation mit einem in dem Speicher 24 gespeicherten mittelwertfreien Referenzsignal synchronisiert. In Schritt 31 wird die Differenz der miteinander synchronisierten Signale durch Subtraktion des Referenzsignals berechnet. In Schritt 32 wird das Differenzsignal auf das Vorliegen einer Verunreinigung hin bewertet und in Schritt 33 das Ergebnis der Bewertung an die Steuereinheit 25 der Bearbeitungsmaschine gemeldet.

Wenn in Schritt 33 eine Verunreinigung gemeldet wird, veranlasst die Steuereinheit 25 das Lösen des Werkzeugs oder Werkzeugträgers 6 durch die Spannvorrichtung 4, seine Entfernung vom Rotorkopf 5 durch den Werkzeugwechsler und eine automatische Reinigung der Plananlagefläche 8. Wenn dies nicht zum Erfolg führt, sondern nach einem erneuten Spannen des Werkzeugs oder Werkzeugträgers 6 abermals eine Verunreinigung festgestellt wird, wird durch eine entsprechende Fehleranzeige ein Eingriff des Bedienpersonals der Bearbeitungsmaschine angefordert. Wird bei einer Überprüfung durch Bedienpersonal keine Verunreinigung festgestellt, dann deutet die festgestellte ungleichmäßige Deformation des Rotorkopfes 5 auf einen Defekt der Werkzeugspannvorrichtung 4 in Form eines Verschleißes oder Bruchs einer einzelnen Spannzange hin.

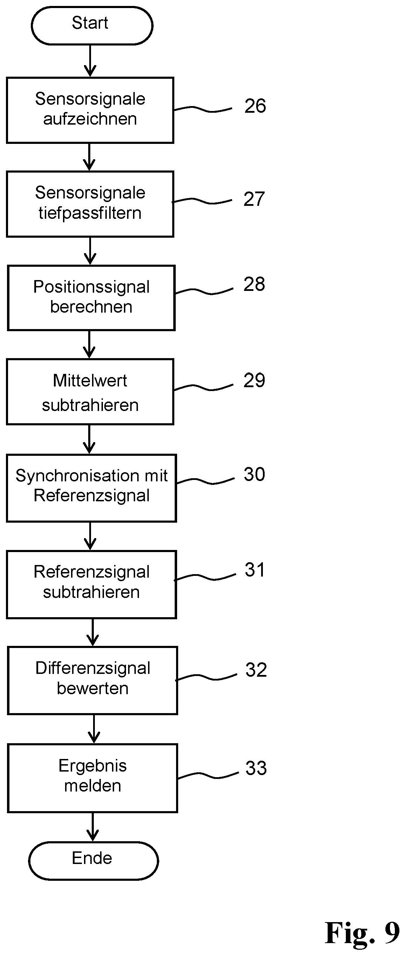

Die Ermittlung des in dem Speicher 24 gespeicherten Referenzsignals erfolgt ebenfalls mit Hilfe der erfindungsgemäßen Vorrichtung, wobei durch eine Überprüfung vor dem Spannen eines Werkzeugs oder Werkzeugträgers 6 sichergestellt wird, dass keine Verunreinigung vorhanden ist, und von dem Ablauf gemäß Fig. 9 nur die Schritte 26 bis 28 durchlaufen werden. Nach Schritt 28 wird das an dieser Stelle vorliegende Signal als Referenzsignal in dem Speicher 24 gespeichert.

Vorteilhaft weil am einfachsten ist in jedem Fall eine Messung bei einer konstanten Drehzahl des Rotors 3. Eine solche Messung kann beispielsweise erfolgen, während die Arbeitsspindel 1 nach einem Werkzeugwechsel die Bearbeitungsposition anfährt. Die Drehzahl kann hierbei deutlich unter der normalen Betriebsdrehzahl liegen. Grundsätzlich ist auch eine Messung während der Beschleunigung des Rotors 3 auf die Betriebsdrehzahl möglich, doch erfordert dies wegen der Variation der Zuordnung zwischen Zeit und Drehwinkel einen höheren Aufwand in der Signalverarbeitung.

Wenn als Ergebnis einer Durchführung des kompletten Ablaufs gemäß keine signifikante Ungleichmäßigkeit der Deformation des Rotorkopfes 5 entlang seines Umfangs feststellbar ist, kann davon ausgegangen werden, dass keine Verunreinigung zwischen dem Rotorkopf 5 und dem Werkzeug oder Werkzeugträger 6 vorhanden ist.

Mittels der erfindungsgemäßen Vorrichtung kann aber auch festgestellt werden, ob die Spannkraft der Werkzeugspannvorrichtung 4 im zulässigen Bereich liegt. Hierzu erfolgt während eines Werkzeugwechsels entweder im gelösten Zustand der Werkzeugspannvorrichtung 4 oder im gespannten Zustand derselben ohne Vorhandensein eines Werkzeugs oder Werkzeugträgers 6, d.h. wenn der Rotorkopf 5 wegen fehlenden Kraftflusses nicht axial deformiert ist, eine Positionsmessung des Messabschnitts 11 des Rotorkopfes 5 mittels des Magnetfeldsensors 12 während einer Umdrehung des Rotors 3. Die Ausgangssignale des Magnetfeldsensors 12 werden entsprechend den Schritten 26 bis 28 des in Fig. 10 dargestellten Ablaufs verarbeitet. Anschließend wird wie in Schritt 29 der Mittelwert des Positionssignals berechnet, jedoch nicht von dem Positionssignal subtrahiert, sondern stattdessen gespeichert. Nach dem Spannen des Werkzeugs oder Werkzeugträgers 6 erfolgt dann die normale Positionsmessung des Messabschnitts 11 des Rotorkopfes 5 mittels des Magnetfeldsensors 12 während einer Umdrehung des Rotors 3 und es werden ebenfalls die Schritte 26 bis 28 der Signalverarbeitung gemäß Fig. 10 durchlaufen und anschließend ebenfalls der Mittelwert des Positionssignals berechnet.

Dann wird die Differenz der Positionsmittelwerte berechnet, die angibt, welche axiale mittlere Deformation der Messabschnitt 11 des Rotorkopfes 5 durch das Spannen des Werkzeugs oder Werkzeugträgers 6 erfahren hat. Dieser gesamte Ablauf wird erstmals bei der Inbetriebnahme einer neuen Werkzeugspannvorrichtung 4 durchlaufen und die in diesem Fall erhaltene Differenz der Positionsmittelwerte vor und nach dem Spannen des Werkzeugs oder Werkzeugträgers 6 als Referenzwert der axialen Deformation gespeichert. Bei einem Werkzeugwechsel im laufenden Betrieb der Werkzeugspannvorrichtung 4 werden in gleicher Weise besagte Positionsmittelwerte vor und nach dem Spannen des Werkzeugs oder Werkzeugträgers 6 ermittelt und dann von dem gespeicherten Referenzwert subtrahiert.

Wenn man davon ausgeht, dass die Spannkraft einer neuen Werkzeugspannvorrichtung 4, die den Referenzwert der axialen Deformation erzeugt hat, korrekt ist, dann kann durch einen Vergleich der Abweichung der aktuellen Differenz der Positionsmittelwerte vom Referenzwert mit einem geeigneten Schwellwert festgestellt werden, ob die Spannkraft noch einen ausreichenden Wert hat. Wenn der Vergleich erweist, dass die mittlere axiale Deformation des Rotorkopfes 5 im laufenden Betrieb signifikant geringer ist als die mittlere axiale Deformation bei korrekter Spannkraft, indem die Abweichung zwischen den beiden einen Schwellwert überschreitet, dann muss die Spannkraft über das zulässige Maß hinaus nachgelassen haben, was auf einen Defekt oder übermäßigen Verschleiß der Werkzeugspannvorrichtung 4 hindeutet.

Ein Effekt, welcher die Positionsänderung des Messabschnitts 11 des Rotorkopfes 5 infolge der Deformation durch die Spannkraft der Werkzeugspannvorrichtung 4 überlagert, ist die als Spindelwachstum bekannte axiale Vorwärtsverlagerung des gesamten Rotors 3 einer Arbeitsspindel 1 infolge der Erwärmung seiner Lagerung im Betrieb. Die hierdurch verursachte Positionsänderung ist keine Deformation des Rotorkopfes 5, sondern eine axiale Verschiebung des gesamten Rotors 3. Sie spielt für die Erkennung einer Verunreinigung keine Rolle, da bei letzterer die Mittelwerte sowohl des aktuellen Positionssignals, als auch des Referenzsignals eliminiert werden und nur die mittelwertfreie axiale Positionsänderung des Messabschnitts 11 des Rotorkopfes 5 während einer Umdrehung ausgewertet wird.

Für die Überwachung der Spannkraft der Werkzeugspannvorrichtung 4 ist das Spindelwachstum zwar potentiell von Bedeutung, da die hierdurch verursachte Positionsänderung des Messabschnitts 11 des Rotorkopfes 5 die gleiche Richtung hat wie dessen Positionsänderung infolge einer geringeren axialen Deformation wegen nachlassender Spannkraft. Das Spindelwachstum ist jedoch ein vergleichsweise langsamer Vorgang, so dass davon ausgegangen werden kann, dass die hierdurch verursachte Verlagerung des Rotors 3 während eines Werkzeugwechsels, der bei modernen Bearbeitungsmaschinen nur sehr wenig Zeit in Anspruch nimmt, nahezu konstant bleibt. Daher wird die Messung der Verformung des Messabschnitts 11 des Rotorkopfes 5 infolge der Spannkraft in Form der Differenzbildung zwischen den Positionen mit und ohne Spannkraftbeaufschlagung des Rotorkopfes 5 durch das Spindelwachstum nicht verfälscht.

Andererseits kann das Spindelwachstum allein beispielsweise anhand der zuvor erwähnten Positionsmessung des Messabschnitts 11 des Rotorkopfes 5 mittels des Magnetfeldsensors 12 während einer Umdrehung des Rotors 3 während eines Werkzeugwechsels entweder im gelösten Zustand der Werkzeugspannvorrichtung 4 oder im gespannten Zustand derselben ohne Vorhandensein eines Werkzeugs oder Werkzeugträgers 6 erfasst werden. Hierzu muss eine erste Messung im kalten Zustand, d.h. bei Betriebsbeginn der Bearbeitungsmaschine durchgeführt und der dabei erhaltene Messwert als Referenzwert gespeichert werden. Während des Betriebs kann dann bei jedem Werkzeugwechsel eine Positionsmessung im gelösten Zustand der Werkzeugspannvorrichtung 4 oder im gespannten Zustand derselben ohne Vorhandensein eines Werkzeugs oder Werkzeugträgers 6 durchgeführt und die Abweichung des Positionswertes von dem Referenzwert berechnet werden. Da bei diesen Messungen keine Deformation des Rotorkopfes 5 vorliegt, kann eine festgestellte Positionsänderung nur auf einem Spindelwachstum beruhen.

Alternativ kann auch der Positionsmittelwert bei gespanntem Werkzeug oder Werkzeugträger 6 im kalten Zustand, d.h. bei Betriebsbeginn der Bearbeitungsmaschine und während des Betriebs erfasst werden, wenn davon ausgegangen werden kann, dass eine Änderung desselben während des Betriebs nahezu ausschließlich durch Spindelwachstum verursacht wird. Dies ist in der Praxis der Fall, da das Ausmaß des Spindelwachstums wesentlich größer ist als das Ausmaß der axialen Deformation des Rotorkopfes 5 durch die Spannkraft und sich letztere außerdem während des Betriebs in der Regel nur sehr langsam und geringfügig ändert.

Mittels der erfindungsgemäßen Arbeitsspindel kann also je nach Art der Signalverarbeitung sowohl eine Verunreinigung einer Kontaktfläche zwischen dem Rotorkopf 5 und dem Werkzeug oder Werkzeughalter 6, als auch ein übermäßiger Verschleiß oder Ausfall der Werkzeugspannvorrichtung 4 erkannt werden, als auch ohne Einsatz eines zusätzlichen Sensors das Spindelwachstum erfasst werden.

## Patentansprüche

1. Arbeitsspindel mit einer Überwachungsvorrichtung, die mindestens einen am Stator (2) oder am Rotor (3) der Arbeitsspindel (1) angeordneten Magnet (14) und mindestens einen am Stator (2) einem Messabschnitt (11) des Rotorkopfes (5) radial gegenüberliegend angeordneten Magnetfeldsensor (12) aufweist, wobei der Messabschnitt (11) von dem Magnetfeld des Magneten (14) durchsetzt wird und bei einer Spannung eines Werkzeugs oder Werkzeughalters (6) am Rotorkopf (5) mittels einer in dem Rotor (3) angeordneten Werkzeugspannvorrichtung (4) von einem axialen Kraftfluss durchsetzt wird, wobei der Rotorkopf (5) in seinem Messabschnitt (11) eine in Axialrichtung variierende Magnetisierbarkeit oder Magnetisierung aufweist, wobei der Magnetfeldsensor (12) richtungsempfindlich ist, und wobei er mit einer Auswertungseinrichtung (17) verbunden ist, welche dazu eingerichtet ist, aus der von dem Magnetfeldsensor (12) während einer Umdrehung des Rotors erfassten Stärke des Magnetfeldes als Funktion des Drehwinkels ein Maß für die axiale Deformation des Rotorkopfes (5) als Funktion des Drehwinkels zu ermitteln.

2. Arbeitsspindel nach Anspruch 1, wobei die Auswertungseinrichtung (17) dazu eingerichtet ist, aus der von dem Magnetfeldsensor (12) während einer Umdrehung des Rotors erfassten Stärke des Magnetfeldes als Funktion des Drehwinkels ein Maß für die axiale Position des Rotorkopfes (5) relativ zum Stator (2) zu ermitteln.

3. Arbeitsspindel nach Anspruch 1 oder 2, wobei am Stator (2) dem Messabschnitt (11) des Rotorkopfes (5) radial gegenüberliegend der mindestens eine Magnet (14) mit radialer Ausrichtung seiner Pole angeordnet ist, und wobei der Messabschnitt (11) des Rotorkopfes (5) an seiner Oberfläche mindestens zwei in Umfangsrichtung verlaufende und in Axialrichtung voneinander beabstandete Nuten (9) aufweist.

4. Arbeitsspindel nach Anspruch 3, wobei die Nuten (9) mindestens an einer Stelle in Umfangsrichtung des Messabschnitts (11) des Rotorkopfes (5) eine Markierung vorbestimmter Länge in Umfangsrichtung in Form einer Unterbrechung oder eines axialen Versatzes vorbestimmten Ausmaßes aufweisen.

5. Arbeitsspindel nach Anspruch 1 oder 2, wobei der mindestens eine Magnet aus mindestens drei im Messabschnitt (11) des Rotorkopfes (5) axial aufeinanderfolgend angeordneten Magneten oder aus mindestens drei axial aufeinanderfolgenden magnetisierten Bereichen des Rotorkopfes (5) besteht wobei die Magnetpole jeweils in radialer Richtung ausgerichtet sind und jeweils zwei axial aufeinanderfolgende Magnete oder magnetisierte Bereiche eine umgekehrte radiale Anordnung der Magnetpole haben.

6. Arbeitsspindel nach Anspruch 5, wobei die im Messabschnitt (11) des Rotorkopfes (5) angeordneten Magnete oder magnetisierten Bereiche mindestens an einer Stelle in Umfangsrichtung des Messabschnitts (11) des Rotorkopfes eine Markierung vorbestimmter Länge in Umfangsrichtung in Form einer Unterbrechung der Magnetisierung oder eines axialen Versatzes vorbestimmten Ausmaßes der Magnetisierung aufweisen.

7. Arbeitsspindel nach einem der Ansprüche 1 bis 6, wobei der Magnetfeldsensor (12) ein magnetoresistiver Sensor ist, der mindestens eine Brückenschaltung aus Widerständen aufweist, deren Wert jeweils von der Stärke und Richtung eines sie durchsetzenden Magnetfeldes abhängt, und wobei die axiale Variation der Magnetisierbarkeit oder Magnetisierung des Messabschnitts (11) des Rotorkopfes (5) periodisch ist und die geometrische Anordnung der Widerstände in axialer Richtung so auf diese axiale Variation abgestimmt ist, dass eine axiale Verschiebung des Rotorkopfes (5) gegenüber dem Stator (2) um eine Periodenlänge (L) der axialen Variation einen periodischen Verlauf des Ausgangssignals der Brückenschaltung als Funktion der axialen Verschiebung des Rotorkopfes (5) mit gleicher Periodenlänge (L) zur Folge hat.

8. Arbeitsspindel nach einem der Ansprüche 1 bis 7, wobei
die Auswertungseinrichtung (17) einen Speicher (24) enthält, in dem ein Referenzsignal gespeichert ist, welches aus mindestens einem bei einer Umdrehung des Rotors (3) mit einem fehlerfrei gespannten Werkzeug oder Werkzeugträger (6) aufgezeichneten Sensorsignal abgeleitet wurde, und wobei die Auswertungseinrichtung (17) dazu eingerichtet ist, die axiale Deformation des Rotorkopfes (5) anhand der Abweichung zwischen einem Signal, welches aus mindestens einem bei einer Umdrehung des Rotors (3) mit einem gespannten Werkzeug oder Werkzeughalter (6) aufgezeichneten Sensorsignal (21, 22) abgeleitet wurde, und dem gespeicherten Referenzsignal zu ermitteln.

9. Arbeitsspindel nach einem der Ansprüche 1 bis 8, wobei die Auswertungseinrichtung (17) dazu eingerichtet ist, aus der axialen Deformation des Rotorkopfes (5) ein Signal abzuleiten, welches einen fehlerhaften Spannzustand eines Werkzeugs oder Werkzeugträgers (6) anzeigt.

10. Arbeitsspindel nach einem der Ansprüche 1 bis 9, wobei am Stator (2) dem Messabschnitt (11) des Rotorkopfes (5) radial gegenüberliegend eine Vielzahl von richtungsempfindlichen Magnetfeldsensoren (12) voneinander in Umfangsrichtung des Stators (2) beabstandet angeordnet und jeweils mit der Auswertungseinrichtung (17) verbunden sind.

11. Verfahren zur Überwachung einer Arbeitsspindel (1) nach einem der Ansprüche 1 bis 10, das folgende Schritte aufweist:
a) Aufzeichnen mindestens eines Signals (21, 22), welches mit einem am Rotor (3) der Arbeitsspindel (1) gespannten Werkzeug oder Werkzeugträger (6) aus mindestens einem von einem Magnetfeldsensor (12) innerhalb einer Umdrehung des Rotors (3) abgegebenen Signal abgeleitet wird;
b) Berechnen eines Positionssignals, welches die axiale Position eines dem Magnetfeldsensor (12) radial gegenüberliegenden Messabschnitts (11) des Rotorkopfes (5) als Funktion des Drehwinkels des Rotors (3) innerhalb einer Umdrehung desselben angibt, aus dem aufgezeichneten Signal (21, 22);
c) Berechnung eines Differenzsignals als Funktion des Drehwinkels des Rotors (3) innerhalb einer Umdrehung desselben aus dem berechneten Positionssignal und einem in einem Speicher (24) gespeicherten Referenzsignal;
d) Ermittlung mindestens eines Maßes für die axiale Deformation des Rotorkopfes (5) aus dem berechneten Differenzsignal,
e) Vergleich des ermittelten Maßes für die axiale Deformation des Rotorkopfes (5) mit einem Grenzwert und Abgabe eines Zustandssignals, welches einen fehlerhaften Spannzustand eines gespannten Werkzeugs oder Werkzeugträgers (6) anzeigt, in Abhängigkeit von dem Vergleichsergebnis.

12. Verfahren nach Anspruch 11, wobei das Referenzsignal durch Anwendung der Schritte a) und b) bei einer fehlerfreien Spannung eines gleichartigen Werkzeugs oder Werkzeugträgers (6) ermittelt und in dem Speicher (24) gespeichert wird.

13. Verfahren nach Anspruch 11 oder 12, wobei bei der Durchführung des Schrittes c) der jeweilige Mittelwert des Positionssignals und des Referenzsignals berechnet und von jedem der beiden Signale zunächst sein Mittelwert subtrahiert wird, dass zur Berechnung des Differenzsignals das mittelwertfreie Referenzsignal vom mittelwertfreien Positionssignal subtrahiert wird, und wobei das Zustandssignal das Vorhandensein einer Verunreinigung zwischen einem gespannten Werkzeug oder Werkzeugträger (6) und einer Oberfläche (8) des Rotorkopfes (5) anzeigt.

14. Verfahren nach einem der Ansprüche 11 bis 13, wobei bei der Ermittlung des Referenzsignals die Schritte a) und b) ein erstes Mal ohne axiale Kraftbeaufschlagung des Rotorkopfes (5) und ein zweites Mal mit fehlerfrei gespanntem gleichartigem Werkzeug oder Werkzeugträger (6) durchgeführt werden, wobei
das Referenzsignal durch Subtraktion des bei der ersten Durchführung erhaltenen Positionssignals von dem bei der zweiten Durchführung erhaltenen Positionssignal berechnet wird, wobei bei der Durchführung des Schrittes c) der jeweilige Mittelwert des Positionssignals und des Referenzsignals berechnet wird, wobei zur Berechnung des Differenzsignals der Mittelwert des Referenzsignals vom Mittelwert des Positionssignals subtrahiert wird, und wobei
das Zustandssignal die Ausübung einer unzureichenden Spannkraft durch die Werkzeugspannvorrichtung (4) anzeigt.

15. Verfahren nach einem der Ansprüche 11 bis 14, wobei
die Schritte a) und b) ohne axiale Kraftbeaufschlagung des Rotorkopfes (5) in einem definieren Referenzzustand der Arbeitsspindel (1) durchgeführt werden und der Mittelwert des erhaltenen Positionssignals berechnet und als Referenzmittelwert gespeichert wird, und wobei
die Schritte a) und b) ohne axiale Kraftbeaufschlagung des Rotorkopfes (5) in einem aktuellen Betriebszustand der Arbeitsspindel (1) durchgeführt werden und der aktuelle Mittelwert des erhaltenen Positionssignals berechnet und eine axiale Verschiebung des Rotorkopfes (5) relativ zum Stator (2) durch Subtraktion des Referenzmittelwertes vom aktuellen Mittelwert berechnet und an eine übergeordnete Steuereinheit (24) übermittelt wird.

## Claims

1. Work spindle with a monitoring device, which has at least one magnet (14) arranged on the stator (2) or on the rotor (3) of the work spindle (1) and at least one magnetic field sensor (12) arranged on the stator (2) in a manner radially opposite a measurement portion (11) of the rotor head (5), wherein the magnetic field of the magnet (14) passes through the measurement portion (11) and, when a tool or tool holder (6) is clamped on the rotor head (5) by means of a tool clamping device (4) arranged in the rotor (3), an axial force flow passes through said measurement portion, wherein the rotor head (5) has, in its measurement portion (11), a magnetizability or magnetization that varies in the axial direction, wherein the magnetic field sensor (12) is direction-sensitive, and wherein it is connected to an evaluation apparatus (17) which is designed to determine a measure of the axial deformation of the rotor head (5) as a function of the angle of rotation from the strength of the magnetic field, as a function of the angle of rotation, detected by the magnetic field sensor (12) during one revolution of the rotor.

2. Work spindle according to claim 1, wherein the evaluation apparatus (17) is designed to determine a measure of the axial position of the rotor head (5) relative to the stator (2) as a function of the angle of rotation from the strength of the magnetic field detected by the magnetic field sensor (12) during one revolution of the rotor.

3. Work spindle according to claim 1 or 2, wherein the at least one magnet (14) is arranged on the stator (2), in a manner radially opposite the measurement portion (11) of the rotor head (5), with radial alignment of its poles, and wherein the measurement portion (11) of the rotor head (5) has, on its surface, at least two grooves (9) extending in the circumferential direction and spaced apart from one another in the axial direction.

4. Work spindle according to claim 3, wherein the grooves (9) have a marking of a predetermined length in the circumferential direction, in the form of an interruption or an axial offset of a predetermined extent, at least at one point in the circumferential direction of the measurement portion (11) of the rotor head (5).

5. Work spindle according to claim 1 or 2, wherein the at least one magnet consists of at least three magnets arranged axially successively in the measurement portion (11) of the rotor head (5) or of at least three axially successive magnetized regions of the rotor head (5)
wherein the magnetic poles are each aligned in the radial direction and every two axially successive magnets or magnetized regions have an inverted radial arrangement of the magnetic poles.

6. Work spindle according to claim 5, wherein the magnets or magnetized regions arranged in the measurement portion (11) of the rotor head (5) have a marking of a predetermined length in the circumferential direction, in the form of an interruption of the magnetization or an axial offset of a predetermined extent of the magnetization, at least at one point in the circumferential direction of the measurement portion (11) of the rotor head.

7. Work spindle according to any of claims 1 to 6, wherein
the magnetic field sensor (12) is a magnetoresistive sensor which has at least one bridge circuit of resistors, the value of which depends on the strength and direction of a magnetic field passing through them, and wherein the axial variation of the magnetizability or magnetization of the measurement portion (11) of the rotor head (5) is periodic and the geometric arrangement of the resistors in the axial direction is adapted to this axial variation such that an axial displacement of the rotor head (5) relative to the stator (2) by a period length (L) of the axial variation results in a periodic waveform of the output signal of the bridge circuit as a function of the axial displacement of the rotor head (5) with the same period length (L).

8. Work spindle according to any of claims 1 to 7, wherein
the evaluation apparatus (17) contains a memory (24) in which a reference signal is stored which was derived from at least one sensor signal recorded during one revolution of the rotor (3) with a tool or tool carrier (6) clamped fault-free, and wherein the evaluation apparatus (17) is designed to determine the axial deformation of the rotor head (5) on the basis of the deviation between a signal derived from at least one sensor signal (21, 22) recorded during one revolution of the rotor (3) with a clamped tool or tool holder (6), and the stored reference signal.

9. Work spindle according to any of claims 1 to 8, wherein the evaluation apparatus (17) is designed to derive a signal which indicates a faulty clamping state of a tool or tool carrier (6) from the axial deformation of the rotor head (5).

10. Work spindle according to any of claims 1 to 9, wherein
a plurality of direction-sensitive magnetic field sensors (12) are arranged on the stator (2) in a manner radially opposite the measurement portion (11) of the rotor head (5) and at a distance from one another in the circumferential direction of the stator (2), and are each connected to the evaluation apparatus (17).

11. Method for monitoring a work spindle (1) according to any of claims 1 to 10, comprising the following steps:
a) recording at least one signal (21, 22) which, with a tool or tool carrier (6) clamped on the rotor (3) of the work spindle (1), is derived from at least one signal emitted by a magnetic field sensor (12) within one revolution of the rotor (3);
b) calculating, from the recorded signal (21, 22), a position signal which indicates the axial position of a measurement portion (11) of the rotor head (5) radially opposite the magnetic field sensor (12) as a function of the angle of rotation of the rotor (3) within one revolution thereof;
c) calculating a difference signal as a function of the angle of rotation of the rotor (3) within one revolution thereof from the calculated position signal and a reference signal stored in a memory (24);
d) determining at least one measure of the axial deformation of the rotor head (5) from the calculated difference signal,
e) comparing the determined measure of the axial deformation of the rotor head (5) with a limit value and emitting a state signal which indicates a faulty clamping state of a clamped tool or tool carrier (6), depending on the comparison result.

12. Method according to claim 11, wherein the reference signal is determined by applying steps a) and b) in the case of fault-free clamping of a similar tool or tool carrier (6), and is stored in the memory (24).

13. Method according to claim 11 or 12, wherein
when carrying out step c), the respective mean value of the position signal and the reference signal is calculated and the mean value is first subtracted from each of the two signals and, to calculate the difference signal, the mean-value-free reference signal is subtracted from the mean-value-free position signal, and wherein
the state signal indicates the presence of contamination between a clamped tool or tool carrier (6) and a surface (8) of the rotor head (5).

14. Method according to any of claims 11 to 13, wherein
when determining the reference signal, steps a) and b) are carried out a first time without axial force being applied to the rotor head (5) and a second time with a similar tool or tool carrier (6) clamped fault-free, wherein
the reference signal is calculated by subtracting the position signal obtained in the first implementation from the position signal obtained in the second implementation, wherein, when step c) is carried out, the respective mean value of the position signal and the reference signal is calculated, wherein, to calculate the difference signal, the mean value of the reference signal is subtracted from the mean value of the position signal, and wherein
the state signal indicates the application of insufficient clamping force by the tool clamping device (4).

15. Method according to any of claims 11 to 14, wherein
steps a) and b) are carried out without axial force being applied to the rotor head (5) in a defined reference state of the work spindle (1) and the mean value of the obtained position signal is calculated and stored as a reference mean value, and wherein
steps a) and b) are carried out without axial force being applied to the rotor head (5) in a current operating state of the work spindle (1), and the current mean value of the obtained position signal is calculated, and an axial displacement of the rotor head (5) relative to the stator (2) is calculated by subtracting the reference mean value from the current mean value, and is transmitted to a higher-level control unit (24).

## Revendications

1. Broche de travail avec un dispositif de surveillance qui présente au moins un aimant (14) agencé au niveau du stator (2) ou au niveau du rotor (3) de la broche de travail (1) et au moins un capteur de champ magnétique (12) agencé au niveau du stator (2) et radialement opposé à une section mesurée (11) de la tête de rotor (5), dans laquelle la section mesurée (11) est soumise au champ magnétique de l'aimant (14) et, lors d'un serrage d'un outil ou d'un porte-outil (6) au niveau de la tête de rotor (5) au moyen d'un dispositif de serrage d'outil (4) agencé dans le rotor (3), est soumise à un flux de force axial, dans laquelle la tête de rotor (5) présente, dans sa section mesurée (11), une capacité à être magnétisée ou une magnétisation variant dans la direction axiale, dans laquelle le capteur de champ magnétique (12) est sensible à la direction, et dans laquelle il est relié à un équipement d'évaluation (17), lequel est conçu pour, à partir de la force du champ magnétique, saisie par le capteur de champ magnétique (12) pendant une rotation du rotor, en tant que fonction de l'angle de rotation, établir une mesure pour la déformation axiale de la tête de rotor (5) en tant que fonction de l'angle de rotation.

2. Broche de travail selon la revendication 1, dans laquelle l'équipement d'évaluation (17) est conçu pour, à partir de la force du champ magnétique, saisie par le capteur de champ magnétique (12) pendant une rotation du rotor, en tant que fonction de l'angle de rotation, établir une mesure pour la position axiale de la tête de rotor (5) par rapport au stator (2).

3. Broche de travail selon la revendication 1 ou 2, dans laquelle, au niveau du stator (2) et radialement opposé à la section mesurée (11) de la tête de rotor (5), le au moins un aimant (14) est agencé avec une orientation radiale de ses pôles, et dans laquelle la section mesurée (11) de la tête de rotor (5) présente, au niveau de sa surface, au moins deux rainures (9) se déroulant dans la direction périphérique et espacées les unes par rapport aux autres dans la direction axiale.

4. Broche de travail selon la revendication 3, dans laquelle les rainures (9) présentent, au moins en un emplacement dans la direction périphérique de la section mesurée (11) de la tête de rotor (5), un marquage d'une longueur prédéterminée dans la direction périphérique sous la forme d'une interruption ou d'un décalage axial d'une dimension prédéterminée.

5. Broche de travail selon la revendication 1 ou 2, dans laquelle le au moins un aimant est composé d'au moins trois aimants agencés de façon à se succéder axialement dans la section mesurée (11) de la tête de rotor (5) ou d'au moins trois régions, magnétisées et se succédant axialement, de la tête de rotor (5), dans laquelle les pôles magnétiques sont respectivement orientés dans la direction radiale et respectivement deux aimants se succédant axialement ou régions magnétisées ont un agencement radial inversé des pôles magnétiques.

6. Broche de travail selon la revendication 5, dans laquelle les aimants ou les régions magnétisées agencés dans la section mesurée (11) de la tête de rotor (5) présentent, au moins en un emplacement dans la direction périphérique de la section mesurée (11) de la tête de rotor, un marquage d'une longueur prédéterminée dans la direction périphérique sous la forme d'une interruption de la magnétisation ou d'un décalage axial d'une dimension prédéterminée de la magnétisation.

7. Broche de travail selon l'une des revendications 1 à 6, dans laquelle le capteur de champ magnétique (12) est un capteur magnétorésistif qui présente au moins un montage en pont de résistances dont la valeur dépend respectivement de la force et de la direction d'un champ magnétique auquel elles sont soumises, et dans laquelle la variation axiale de la capacité à être magnétisée ou de la magnétisation de la section mesurée (11) de la tête de rotor (5) est périodique et l'agencement géométrique des résistances dans la direction axiale est accordé dans la direction axiale à cette variation axiale de sorte qu'un déplacement axial de la tête de rotor (5) par rapport au stator (2) d'une longueur de période (L) de la variation axiale entraîne un déroulement périodique du signal de sortie du montage en pont en tant que fonction du déplacement axial de la tête de rotor (5) avec une longueur de période (L) identique.

8. Broche de travail selon l'une des revendications 1 à 7, dans laquelle l'équipement d'évaluation (17) contient une mémoire (24) dans laquelle est mémorisé un signal de référence, lequel a été déduit à partir d'au moins un signal de capteur enregistré lors d'une rotation du rotor (3) avec un outil ou un porte-outil (6) serré sans erreur, et dans laquelle l'équipement d'évaluation (17) est conçu pour établir la déformation axiale de la tête de rotor (5) à l'aide de l'écart entre un signal, lequel a été déduit à partir d'au moins un signal de capteur (21, 22) enregistré lors d'une rotation du rotor (3) avec un outil ou un porte-outil (6) serré, et le signal de référence mémorisé.

9. Broche de travail selon l'une des revendications 1 à 8, dans laquelle l'équipement d'évaluation (17) est conçu pour déduire un signal à partir de la déformation axiale de la tête de rotor (5), lequel signal indique un état de serrage sans erreur d'un outil ou d'un porte-outil (6).

10. Broche de travail selon l'une des revendications 1 à 9, dans laquelle, au niveau du stator (2) et radialement opposés à la section mesurée (11) de la tête de rotor (5), une pluralité de capteurs de champ magnétique (12) sensibles à la direction sont agencés de façon espacée les uns par rapport aux autres dans la direction périphérique du stator (2) et respectivement reliés à l'équipement d'évaluation (17).

11. Procédé de surveillance d'une broche de travail (1) selon l'une des revendications 1 à 10, qui présente les étapes suivantes :
a) enregistrement d'au moins un signal (21, 22), lequel est déduit avec un outil ou un porte-outil (6) serré au niveau du rotor (3) de la broche de travail (1) à partir d'au moins un signal remis par un capteur de champ magnétique (12) en l'espace d'une rotation du rotor (3);
b) calcul d'un signal de position, lequel fournit la position axiale d'une section mesurée (11) de la tête de rotor (5) radialement opposée au capteur de champ magnétique (12) en tant que fonction de l'angle de rotation du rotor (3) en l'espace d'une rotation de celui-ci, à partir du signal (21, 22) enregistré;
c) calcul d'un signal différentiel en tant que fonction de l'angle de rotation du rotor (3) en l'espace d'une rotation de celui-ci à partir du signal de position calculé et d'un signal de référence mémorisé dans une mémoire (24);
d) établissement d'au moins une mesure pour la déformation axiale de la tête de rotor (5) à partir du signal différentiel calculé;
e) comparaison de la mesure établie pour la déformation axiale de la tête de rotor (5) avec une valeur limite et remise d'un signal d'état, lequel indique un état de serrage sans erreur d'un outil ou d'un porte-outil (6) serré, en fonction du résultat de comparaison.

12. Procédé selon la revendication 11, dans lequel le signal de référence est établi via l'utilisation des étapes a) et b) lors d'un serrage sans erreur d'un outil ou d'un porte-outil (6) similaire et mémorisé dans la mémoire (24).

13. Procédé selon la revendication 11 ou 12, dans lequel, lors de l'exécution de l'étape c), la valeur moyenne respective du signal de position et du signal de référence est calculée et sa valeur moyenne est d'abord soustraite de chacun des deux signaux, en ce que, pour le calcul du signal différentiel, le signal de référence exempt de valeur moyenne est soustrait du signal de position exempt de valeur moyenne, et dans lequel le signal d'état indique la présence d'une impureté entre un outil ou un porte-outil (6) serré et une surface (8) de la tête de rotor (5).

14. Procédé selon l'une des revendications 11 à 13, dans lequel, lors de l'établissement du signal de référence, les étapes a) et b) sont exécutées une première fois sans sollicitation de force axiale de la tête de rotor (5) et une seconde fois avec un outil ou un porte-outil (6) similaire et serré sans erreur, dans lequel le signal de référence est calculé en soustrayant le signal de position obtenu lors de la première exécution du signal de position obtenu lors de la seconde exécution, dans lequel, lors de l'exécution de l'étape c), la valeur moyenne respective du signal de position et du signal de référence est calculée, dans lequel pour le calcul du signal différentiel, la valeur moyenne du signal de référence est soustraite de la valeur moyenne du signal de position, et dans lequel le signal d'état indique l'exercice d'une force de serrage insuffisante par le dispositif de serrage d'outil (4).

15. Procédé selon l'une des revendications 11 à 14, dans lequel les étapes a) et b) sont exécutées sans sollicitation de force axiale de la tête de rotor (5) dans un état de référence défini de la broche de travail (1) et la valeur moyenne du signal de position obtenu est calculée et mémorisée en tant que valeur moyenne de référence, et dans lequel les étapes a) et b) sont exécutées sans sollicitation de force axiale de la tête de rotor (5) dans un état de fonctionnement en cours de la broche de travail (1) et la valeur moyenne en cours du signal de position obtenu est calculée et un déplacement axial de la tête de rotor (5) par rapport au stator (2) est calculé en soustrayant la valeur moyenne de référence de la valeur moyenne en cours et transmis à une unité de commande (24) agencée à un rang supérieur.
